# EUROPÄISCHE PATENTSCHRIFT

(11) **EP 2 081 706 B1**
(45) Veröffentlichungstag und Bekanntmachung des Hinweises auf die Patenterteilung: **24.07.2013**
(21) Anmeldenummer: 07818530.3
(22) Anmeldetag: 28.09.2007
(51) Int. Cl.: B21D 17/04, B21D 28/12

(54) **WERKZEUG ZUM BEARBEITEN VON PLATTENARTIGEN WERKSTÜCKEN**
TOOL FOR WORKING PLATE-LIKE WORKPIECES
OUTIL D'USINAGE DE PIÈCES EN FORME DE PLAQUES

(30) Priorität: 18.10.2006 DE 102006049045
(43) Veröffentlichungstag der Anmeldung: 29.07.2009
(73) Patentinhaber: TRUMPF Werkzeugmaschinen GmbH + Co. KG, 71254 Ditzingen (DE)
(72) Erfinder: HEUSEL, Jörg, 70435 Stuttgart (DE)
(74) Vertreter: Kohler Schmid Möbus
(86) Internationale Anmeldenummer: PCT/EP2007/008447
(87) Internationale Veröffentlichungsnummer: WO 2008/046499

(56) Entgegenhaltungen:
- EP-A- 0 995 510
- EP-A- 1 152 842
- WO-A-90/02005

## Beschreibung

Die Erfindung betrifft ein Werkzeug zum Bearbeiten, insbesondere zum Umformen und/oder zum Schneiden, von plattenartigen Werkstücken, insbesondere von Blechen, nach dem Oberbegriff von Anspruch 1.

Ein derartiges Werkzeug ist aus der Druckschrift WO 90/02005 bekannt.

Ziel der Erfindung ist es, ein kompaktes Werkzeug bereitzustellen.

Diese Aufgabe wird erfindungsgemäß durch ein Werkzeug nach Patentanspruch 1 gelöst. Gemäß Patentanspruch 1 sind unterschiedliche Einrichtungspaarungen, welche verschiedene drehbare Bearbeitungseinrichtungen umfassen, für die Werkstückbearbeitung aktivierbar. Damit werden bei der Werkstückbearbeitung mit einer der drehbaren Bearbeitungsrichtungen Einflüsse einer zweiten drehbaren Bearbeitungseinrichtung vermieden. Die einzelnen drehbaren Bearbeitungseinrichtungen lassen sich daher mit großer Freiheit gestalten. Dadurch wiederum erweitern sich die Einsatzmöglichkeiten des erfindungsgemäßen Werkzeuges. Die Aktivierung unterschiedlicher Einrichtungspaarungen mit verschiedenen drehbaren Bearbeitungseinrichtungen erfolgt durch Zuordnung ein- und derselben Gegeneinrichtung zu verschiedenen Bearbeitungseinrichtungen, wobei erfindungsgemäß zu diesem Zweck eine Relativdrehbewegung der Gegeneinrichtung und der Bearbeitungseinrichtungen um eine Werkzeugdrehachse ausgeführt wird. Das erfindungsgemäße Werkzeug ist für den Einsatz auf Werkzeugmaschinen vorgesehen, welche üblicherweise Drehantriebe besitzen, mittels derer die Werkzeugteile um Werkzeugdrehachsen gesteuert drehbar sind. Demnach nutzt ein erfindungsgemäßes Werkzeug vorteilhafterweise vorhandene Maschinenachsen, um unterschiedliche Einrichtungspaarungen zu aktivieren. Eine Gegeneinrichtung für die Werkstückbearbeitung ist gemeinsam mit verschiedenen drehbaren Bearbeitungseinrichtungen nutzbar. Eine bestimmte Anzahl an aktivierbaren Einrichtungspaarungen lässt sich mit einer geringen Anzahl an Gegeneinrichtungen bereitstellen. Dies wiederum bedingt eine kostengünstige Werkzeugfertigung.

Vorteilhafte Ausführungsformen des erfindungsgemäßen Werkzeuges sind Gegenstand der abhängigen Patentansprüche 2 bis 8.

Vielfältige Einsatzmöglichkeiten des erfindungsgemäßen Werkzeuges ergeben sich nach Patentanspruch 2 dadurch, dass zwei drehbare Bearbeitungseinrichtungen unterschiedlich sind. Beispielsweise können erfindungsgemäß mit ein und demselben Werkzeug wahlweise eine Sicke oder ein Absatz an einem Werkstück erstellt werden.

Gemäß der bevorzugten Ausführungsform nach Patentanspruch 3 sind wenigstens zwei drehbare Bearbeitungseinrichtungen an einem gemeinsamen Drehkörper vorgesehen, welcher an dem ersten Werkzeugteil drehbar ist. Während im Falle von Bearbeitungseinrichtungen an unterschiedlichen Drehkörpern jeder Drehkörper mittels wenigstens eines Drehlagers an dem Werkzeugteil gelagert ist, wird gemäß Patentanspruch 3 die Anzahl an Drehlagern reduziert. Der durch die Einsparung von Drehlagern gewonnene Bauraum an dem ersten Werkzeugteil ermöglicht es unter anderem, die Drehlager des gemeinsamen Drehkörpers größer und somit stabiler auszulegen. Das erfindungsgemäße Werkzeug ist folglich hoch belastbar.

Fertigungstechnisch vorteilhaft sind die Ausführungsformen des Werkzeuges gemäß den Patentansprüchen 4 und 5. So werden in einfach zu fertigender Weise durch unterschiedliche Querschnitte des gemeinsamen Drehkörpers längs seiner Drehachse unterschiedliche drehbare Bearbeitungseinrichtungen ausgebildet. Eine Rollenform des gemeinsamen Drehkörpers (Patentanspruch 7) ermöglicht die Fertigung des erfindungsgemä-βen Drehkörpers als einfaches Drehteil.

Nach Patentanspruch 6 ist wenigstens eine Gegeneinrichtung vorgesehen, welche an dem zweiten Werkzeugteil drehbar ist. Somit erfolgt die Werkstückbearbeitung unter Abrollen von drehbarer Bearbeitungs- und drehbarer Gegeneinrichtung an der jeweiligen Werkstückseite. Dies bewirkt eine besonders schonende Werkstückbearbeitung.

Gemäß Patentanspruch 7 ist wenigstens eine drehbare Gegeneinrichtung an einer allseitig drehbaren Kugel vorgesehen. Alternativ oder ergänzend ist wenigstens eine drehbare Bearbeitungseinrichtung an einer allseitig drehbaren Kugel vorgesehen. Der Einsatz von Kugeln ermöglicht auch das Herstellen von Konturen mit besonders kleinen Radien. Bei Drehkörpern, welche nur um eine Drehachse drehbar sind, ist in der Regel ein Ausrichten der Drehkörper-Drehachse senkrecht zur Längsrichtung einer zu erstellenden Kontur erforderlich. Bei Verwendung einer allseitig drehbaren Kugel erübrigt sich ein derartiges Ausrichten.

Das erfindungsgemäße Werkzeug nach Patentanspruch 8 besitzt einen Aktivierungsmechanismus, mittels dessen die Gegeneinrichtung der zu aktivierenden Einrichtungspaarung in eine Funktionslage überführbar ist. In der Funktionslage steht die Gegeneinrichtung gegenüber anderen Gegeneinrichtungen zu dem Werkstück hin vor. Alternativ oder ergänzend ist die drehbare Bearbeitungseinrichtung der zu aktivierenden Einrichtungspaarung in eine entsprechende Funktionslage überführbar. Störende Einflüsse von bei der Werkstückbearbeitung nicht aktivierten Gegeneinrichtungen bzw. Bearbeitungseinrichtungen werden auf diese Weise vermieden.

Nachstehend wird die Erfindung anhand beispielhafter schematischer Darstellungen näher erläutert. Es zeigen:
- Figur 1:: eine perspektivische Darstellung einer Werkzeugmaschine zum Schneiden und/oder zum Umformen von Blechen,
- Figur 2:: ein Werkzeug erster Bauart zum Umformen von Blechen,
- Figur 3:: ein Werkzeug zweiter Bauart zum Umformen von Blechen,
- Figur 4:: ein Werkzeug dritter Bauart zum Umformen von Blechen,
- Figur 5:: ein unterer Werkzeugteil eines Werkzeuges vierter Bauart zum Umformen von Blechen in der Draufsicht und
- Figur 6:: ein Werkzeug fünfter Bauart zum Umformen von Blechen.

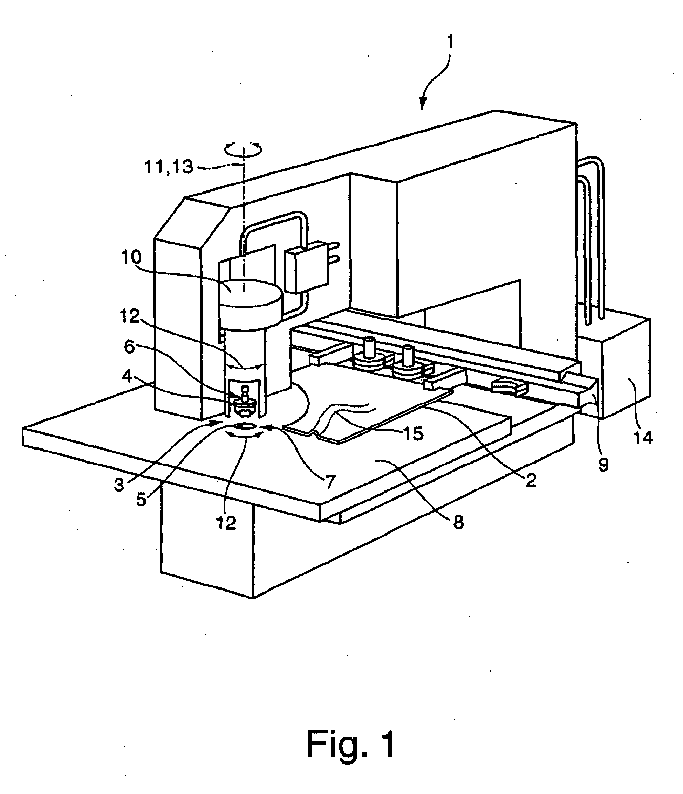

Gemäß Figur 1 weist eine Werkzeugmaschine 1 zum Schneiden und/oder zum Umformen von Blechen 2 ein Werkzeug 3 mit einem als Oberwerkzeug 4 ausgebildeten ersten Werkzeugteil und einem als Unterwerkzeug 5 ausgebildeten zweiten Werkzeugteil auf. Das Oberwerkzeug 4 wird durch eine obere Werkzeugaufnahme 6, das Unterwerkzeug 5 durch eine untere Werkzeugaufnahme 7 gehalten. Das Oberwerkzeug 4 und das Unterwerkzeug 5 sind an einander gegenüberliegenden Seiten des zu bearbeitenden Bleches 2 angeordnet. Das zu bearbeitende Blech 2 lagert auf einem Werkstücktisch 8 und wird bei der Werkstückbearbeitung mittels einer Koordinatenführung 9 relativ zu dem Werkzeug 3 bewegt.

Mittels eines Pressenantriebes 10 ist das Oberwerkzeug 4 entlang einer Beaufschlagungsachse 11 relativ zu dem Unterwerkzeug 5 bewegbar. Die Werkzeugaufnahmen 6 und 7 sind jeweils mit einem Werkzeugdrehantrieb 12 versehen. Mittels der Werkzeugdrehantriebe 12 sind das Oberwerkzeug 4 und das Unterwerkzeug 5 um eine Werkzeugdrehachse 13, welche identisch mit der Beaufschlagungsachse 11 ist, gesteuert drehbar.

Sämtliche Antriebe der Werkzeugmaschine 1 werden durch eine zentrale numerische Steuereinheit 14 gesteuert.

Zu Beginn der Werkstückbearbeitung wird das Blech 2 mittels der Koordinatenführung 9 zwischen dem Oberwerkzeug 4 und dem Unterwerkzeug 5 positioniert. Anschließend wird das Oberwerkzeug 4 mittels des Pressenantriebes 10 entlang der Beaufschlagungsachse 11 abgesenkt, bis das Blech 2 von dem Oberwerkzeug 4 und dem Unterwerkzeug 5 beidseitig beaufschlagt wird. Die Beaufschlagung des Bleches 2 durch das Oberwerkzeug 4 und das Unterwerkzeug 5 erfolgt somit entlang der Beaufschlagungsachse 11.

Ausgehend von diesen Verhältnissen wird das zu bearbeitende Blech 2 mittels der Koordinatenführung 9 relativ zu dem Werkzeug 3 bewegt. Je nach Art des Werkzeuges 3 wird das beaufschlagte Blech 2 entlang einer vorgegebenen Bearbeitungslinie umgeformt oder geschnitten. Beispielhaft ist in Figur 1 eine mit dem Werkzeug 3 an dem Blech 2 erstellte Umformung in Form einer Sicke 15 dargestellt. Die Drehantriebe 12 erlauben eine Ausrichtung der Werkzeugteile längs der an dem Blech 2 zu erstellenden Kontur.

Nach Beendigung der Werkstückbearbeitung mit dem Werkzeug 3 wird das Werkzeug 3 durch ein anderes an der Koordinatenführung 9 angeordnetes Bearbeitungswerkzeug ersetzt. Je nach Art des eingewechselten Werkzeuges erfolgt wiederum eine Bearbeitung des Bleches 2 in kontinuierlicher Arbeitsweise oder aber eine intermittierende, hubweise Bearbeitung. Beispielsweise kann es sich bei dem eingewechselten Werkzeug um ein Stanzwerkzeug handeln.

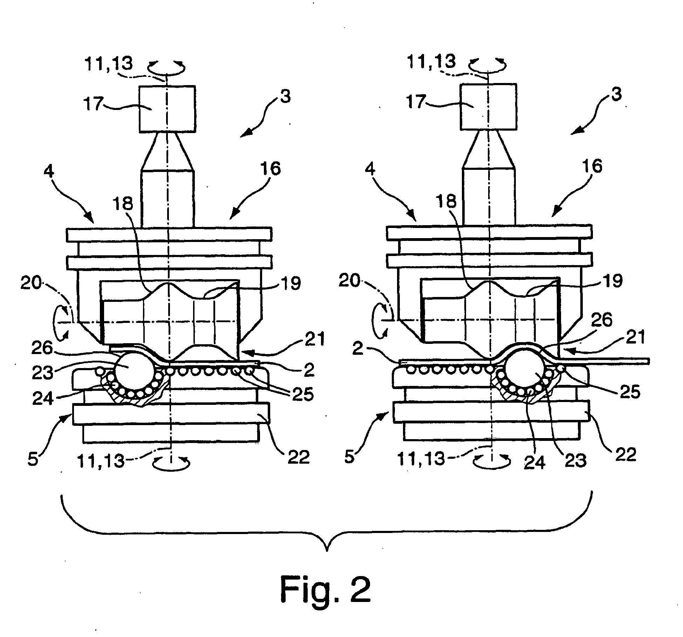

Gemäß Figur 2 besitzt das in Figur 1 gezeigte Oberwerkzeug 4 des Werkzeuges 3 einen Grundkörper 16 mit einem zur Aufnahme in die obere Werkzeugaufnahme 6 dienenden Schaft 17. Außerdem umfasst das Oberwerkzeug 4 zwei unterschiedliche Bearbeitungseinrichtungen 18 und 19. Eine Bearbeitungseinrichtung 18 dient zum Herstellen eines Absatzes und eine Bearbeitungseinrichtung 19 zum Herstellen einer Sicke. Die beiden unterschiedlichen Bearbeitungseinrichtungen 18 und 19 sind an dem Oberwerkzeug 4 um eine Drehachse 20 drehbar. Sie liegen an einem gemeinsamen, als Rolle 21 ausgebildeten Drehkörper senkrecht zu der Beaufschlagungsachse 11 nebeneinander. Außerdem folgen sie um die Werkzeugdrehachse 13 aufeinander.

Die Rolle 21 ist an dem Grundkörper 16 des Oberwerkzeuges 4 mittels nicht näher dargestellter Drehlager gelagert. Sie weist längs ihrer Drehachse 20 unterschiedlich große Querschnitte auf. Durch die Querschnittsvariation werden die drehbaren Bearbeitungseinrichtungen 18 und 19 an der Rolle 21 ausgebildet.

Das Unterwerkzeug 5 weist einen Grundkörper 22 auf, an welchem eine allseitig drehbare Kugel 23 gelagert ist. Zur Veranschaulichung ist das Lager der Kugel 23 teilweise aufgeschnitten dargestellt. Es besitzt eine Vielzahl von kleinen Lagerkugeln 24. An seiner Oberseite bildet das Unterwerkzeug 5 eine Werkstückauflage für das zu bearbeitende Blech 2 aus. Um die Reibung zwischen dem zu bearbeitenden Blech 2 und dem Unterwerkzeug 5 zu reduzieren, sind an dem Unterwerkzeug 5 eine Vielzahl von drehbar gelagerten Auflagekugeln 25 vorgesehen.

Eine drehbare Gegeneinrichtung 26, welche bei der Werkstückbearbeitung mit jeweils einer der Bearbeitungseinrichtungen 18 oder 19 eine Einrichtungspaarung bildet, ist an der allseitig drehbaren Kugel 23 vorgesehen. Im Speziellen stellt die gesamte Oberfläche der allseitig drehbaren Kugel 23 die drehbare Gegeneinrichtung 26 dar.

Bei den in der linken Teildarstellung von Figur 2 dargestellten Verhältnissen befindet sich das Werkzeug 3 in einem Zustand, in dem eine Einrichtungspaarung mit der Bearbeitungseinrichtung 18 und der Gegeneinrichtung 26 für die Werkstückbearbeitung aktiviert ist. Das zu bearbeitende Blech 2 wird durch die Bearbeitungseinrichtung 18 und durch die Gegeneinrichtung 26 entlang der Beaufschlagungsachse 11 beaufschlagt. Ausgehend von der auf der linken Seite von Figur 2 dargestellten Situation wird das Blech 2 mittels der Koordinatenführung 9 relativ zu dem Werkzeug 3 in einer Richtung bewegt, welche senkrecht zu der Zeichenebene von Figur 2 verläuft. Unter Abrollen der Bearbeitungseinrichtung 18 und der damit zusammenwirkenden Gegeneinrichtung 26 auf der jeweiligen Werkstückseite wird in kontinuierlicher Arbeitsweise ein Absatz an dem Blech 2 erstellt.

Gemäß der rechten Teildarstellung von Figur 2 befindet sich das Werkzeug 3 in einem Zustand, in dem eine Einrichtungspaarung mit der Bearbeitungseinrichtung 19 und der Gegeneinrichtung 26 für die Werkstückbearbeitung aktiviert ist. In diesem Fall wird an dem Blech 2 durch eine Relativbewegung von Blech 2 und Werkzeug 3 in einer senkrecht zu der Zeichenebene von Figur 2 verlaufenden Richtung unter Abrollen der Bearbeitungseinrichtung 19 und der Gegeneinrichtung 26 auf den diesen jeweils zugeordneten Werkstückseiten eine Umformung in Form einer Sicke erstellt.

Zum Herstellen von Konturen mit einem gekrümmten Verlauf werden das Oberwerkzeug 4 und das Unterwerkzeug 5 mittels der maschinenseitigen Drehantriebe 12 synchron um die Werkzeugdrehachse 13 gedreht, so dass die Drehachse 20 der Rolle 21 jederzeit senkrecht zur Längsrichtung der zu erstellenden Kontur verläuft. Dadurch wird ein optimales Abrollen der drehbaren Bearbeitungseinrichtungen 18 bzw. 19 auf der ihnen zugeordneten Werkstückseite gewährieistet.

Um zwischen den Verhältnissen auf der linken Seite von Figur 2 und den Verhältnissen auf der rechten Seite von Figur 2 zu wechseln, wird das Unterwerkzeug 5 gegenüber dem Oberwerkzeug 4 mittels seines Drehantriebes 12 um einen Winkel von 180° um die Werkzeugdrehachse 13 gedreht. Unter Umständen ist das Oberwerkzeug 4 zuvor anzuheben und nach der Drehung des Unterwerkzeuges 5 wieder abzusenken.

Durch die beschriebene Relativ-Drehbewegung sind zwei unterschiedliche Einrichtungspaarungen mit jeweils einer der drehbaren Bearbeitungseinrichtungen 18 oder 19 für die Werkstückbearbeitung aktivierbar.

Die Relativ-Drehbewegung erfolgt durch Drehen des Unterwerkzeuges 5 bei stehendem Oberwerkzeug 4. Alternativ kann die aktivierende Relativ-Drehbewegung in einer alleinigen Drehbewegung des Oberwerkzeuges 4 oder aus sich überlagernden Drehbewegungen des Oberwerkzeuges 4 und des Unterwerkzeuges 5 bestehen.

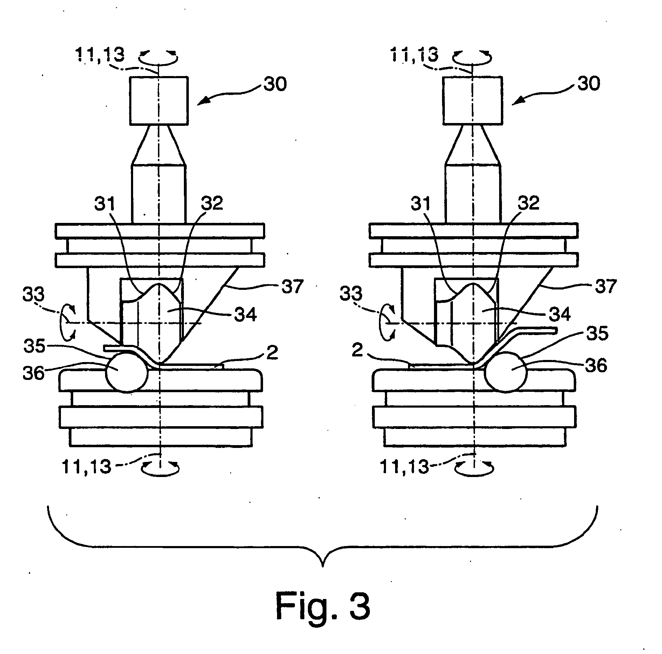

Gemäß Figur 3 dient ein Werkzeug 30 zweiter Bauart zum Umformen von Blechen 2. Das Werkzeug 30 stimmt weitgehend mit dem Werkzeug 3 aus den Figuren 1 und 2 überein. Es besitzt zwei drehbare Bearbeitungseinrichtungen 31 und 32, die um eine Drehachse 33 drehbar und an einem gemeinsamen Drehkörper bzw. einer gemeinsamen Rolle 34 vorgesehen sind. Eine drehbare Gegeneinrichtung 35 ist an einer allseitig drehbaren Kugel 36 ausgebildet.

Im Falle des Werkzeuges 30 werden mit beiden aktivierbaren Einrichtungspaarungen Absätze an dem zu bearbeitenden Blech 2 erstellt. Bei Einsatz der Bearbeitungseinrichtung 31 lassen sich nur relativ niedrige Absätze formen. Aufgrund einer grundkörperseitigen Aussparung 37 können mittels der Bearbeitungseinrichtung 32 relativ hohe Absätze erstellt werden.

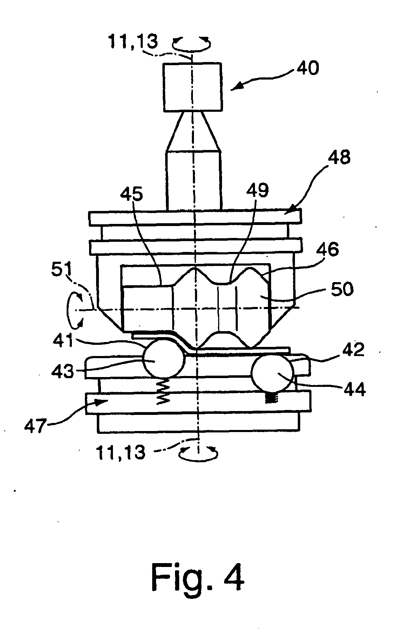

Ein Werkzeug 40 dritter Bauart zum Umformen von Blechen 2 ist in Figur 4 dargestellt. Abweichend von den vorstehend beschriebenen Werkzeugen 3 und 30 besitzt das Werkzeug 40 zwei drehbare Gegeneinrichtungen 41 und 42, die jeweils an Kugeln 43 und 44 vorgesehen sind. Mittels eines nicht näher dargestellten Aktivierungsmechanismus wird eine der Gegeneinrichtungen 41 und 42 in eine Funktionslage überführt. Gemäß Figur 4 befindet sich die Gegeneinrichtung 41 in ihrer Funktionslage, in welcher sie gegenüber der Gegeneinrichtung 42 zu dem Blech 2 hin vorsteht.

Die Gegeneinrichtung 41 und eine drehbare Bearbeitungseinrichtung 45 bilden eine für die Werkstückbearbeitung aktivierte Einrichtungspaarung. Die Gegeneinrichtung 42 befindet sich in Figur 4 in einer Außerfunktionslage.

Werden mittels des Aktivierungsmechanismus die Gegeneinrichtung 42 in ihre Funktionslage und gleichzeitig die Gegeneinrichtung 41 in ihre Außerfunktionslage überführt, so wird die Einrichtungspaarung mit der Gegeneinrichtung 42 und einer drehbaren Bearbeitungseinrichtung 46 für die Werkstückbearbeitung aktiviert.

Alternativ zu den beiden beschriebenen Einrichtungspaarungen ist zusätzlich eine dritte Einrichtungspaarung für die Werkstückbearbeitung aktivierbar. Hierzu wird ausgehend von den in Figur 4 dargestellten Verhältnissen das Unterwerkzeug 47 um einen Winkel von 180° relativ zu dem Oberwerkzeug 48 um die Werkzeugdrehachse 13 gedreht. Alternativ können allein das Oberwerkzeug 48 oder beide Werkzeugteile überlagernd gedreht werden. In jedem Fall wird eine Einrichtungspaarung aktiviert, welche die Gegeneinrichtung 41 und eine drehbare Bearbeitungseinrichtung 49 umfasst.

Sämtliche drehbaren Bearbeitungseinrichtungen 45, 46 und 49 des Werkzeuges 40 sind an einem gemeinsamen Drehkörper bzw. einer gemeinsamen Rolle 50 vorgesehen, welche um eine senkrecht zu der Beaufschlagungsachse 11 verlaufende Drehachse 51 an dem Oberwerkzeug 48 drehbar ist.

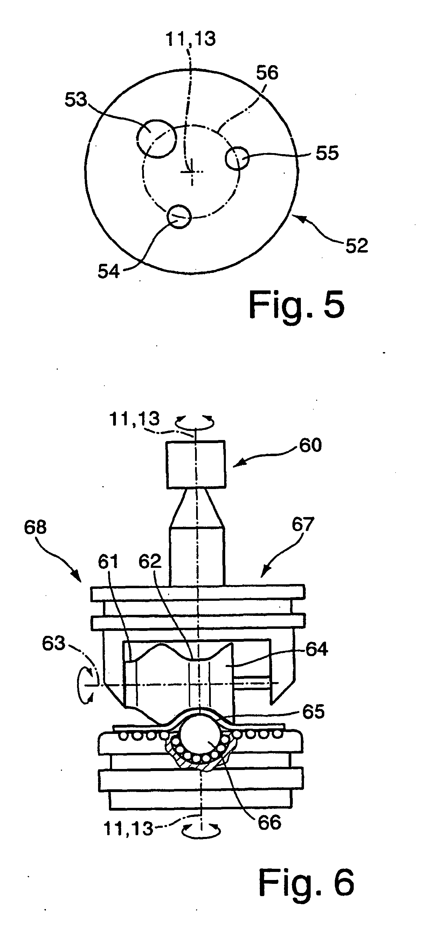

Gemäß Figur 5 weist ein in einer schematischen Draufsicht dargestelltes Unterwerkzeug 52 eines Werkzeuges vierter Bauart drehbare Gegeneinrichtungen an drei allseitig drehbaren Kugeln 53, 54 und 55 auf, welche auf einer Kreisbahn 56 um die Werkzeugdrehachse 13 angeordnet sind. Entsprechend dem Werkzeug 40 gemäß Figur 4 sind die Kugeln 53, 54 und 55 jeweils mittels eines nicht dargestellten Aktivierungsmechanismus in eine Funktionslage überführbar. Die Kugel 53 besitzt einen größeren Durchmesser als die Kugeln 54 und 55. An dem zugehörigen Oberwerkzeug sind drehbare Bearbeitungseinrichtungen vorgesehen, welche jeweils mit einer der drehbaren Gegeneinrichtungen an dem Unterwerkzeug 52 für die Werkstückbearbeitung aktivierbare Einrichtungspaarungen ausbilden.

Figur 6 veranschaulicht anhand eines Werkzeuges 60 fünfter Bauart eine weitere Möglichkeit, unterschiedliche Einrichtungspaarungen mit verschiedenen drehbaren Bearbeitungseinrichtungen für die Werkstückbearbeitung zu aktivieren.

Das Werkzeug 60 besitzt zwei drehbare Bearbeitungseinrichtungen 61 und 62 an einem Drehkörper in Form einer um eine Drehachse 63 drehbaren Rolle 64. Eine Gegeneinrichtung 65 ist an einer allseitig drehbaren Kugel 66 vorgesehen. Die Rolle 64 ist gemeinschaftlich mit den Bearbeitungseinrichtungen 61 und 62 an dem Grundkörper 67 des Oberwerkzeuges 68 in Richtung der Drehachse 63 verschiebbar.

Gemäß Figur 6 befindet sich eine Einrichtungspaarung mit der Bearbeitungseinrichtung 62 und der Gegeneinrichtung 65 in einem für die Werkstückbearbeitung aktivierten Zustand. Um ausgehend von diesem Zustand eine Einrichtungspaarung mit der drehbaren Bearbeitungseinrichtung 61 und der Gegeneinrichtung 65 für die Werkstückbearbeitung zu aktivieren, werden die Bearbeitungseinrichtungen 61 und 62 relativ zu der Gegeneinrichtung 65 in Richtung der Drehachse 63 verschoben.

Die Relativbewegung der Bearbeitungseinrichtungen 61 und 62 einerseits und der Gegeneinrichtung 65 andererseits erfolgt durch Verschieben der Rolle 64 in Richtung der Drehachse 63 an dem Grundkörper 67 des Oberwerkzeuges 68. Dabei wird die Rolle 64 verschoben, bis die Bearbeitungseinrichtung 61 über der Gegeneinrichtung 65 angeordnet ist.

Unter Umständen muss das Oberwerkzeug 68 von dem Blech 2 angehoben werden, bevor die Rolle 64 verschoben werden kann. Nach der Verschiebung der Rolle 64 wird das Oberwerkzeug 68 zur Werkstückbearbeitung wieder auf das Blech 2 abgesenkt.

An dem Werkzeug 60 ist die für die Werkstückbearbeitung aktivierte Einrichtungspaarung im Wesentlichen mittig angeordnet. Somit werden Querkräfte und Momentenbelastungen vermieden oder zumindest reduziert, die bei einer außermittigen Werkstückbearbeitung entstehen können.

Von den vorstehenden Bauarten verschiedene Bauarten von Werkzeugen zum Bearbeiten von Blechen sind denkbar. Beispielsweise können als drehbare Bearbeitungs- und Gegeneinrichtungen auch Schneidkanten vorgesehen sein.

## Patentansprüche

1. Werkzeug zum Bearbeiten, insbesondere zum Umformen und/oder zum Schneiden, von plattenartigen Werkstücken, insbesondere von Blechen, mit
- einem ersten Werkzeugteil (4, 48, 68) und einem zweiten Werkzeugteil (5, 47, 52), welche an einander gegenüberliegenden Seiten eines zu bearbeitenden Werkstückes (2) derart anordenbar sind, dass die beiden Werkzeugteile (4, 5, 47, 48, 52, 68) entlang einer Beaufschlagungsachse (11) einander gegenüberstehen,
- wenigstens zwei drehbaren Bearbeitungseinrichtungen (18, 19, 31, 32, 45, 46, 49, 61, 62) die an dem ersten Werkzeugteil (4, 48, 68) um wenigstens eine senkrecht zu der Beaufschlagungsachse (11) verlaufende Drehachse (20, 33, 51, 63) drehbar sind, und die senkrecht zu der Beaufschlagungsachse (11) aufeinander folgen,
- und wenigstens einer Gegeneinrichtung (26, 35, 41, 42, 65) an dem zweiten Werkzeugteil (5, 47, 52),
wobei zumindest eine der drehbaren Bearbeitungseinrichtungen (18, 19, 31, 32, 45, 46, 49, 61, 62) und eine Gegeneinrichtung (26, 35, 41, 42, 65) für die Werkstückbearbeitung eine Einrichtungspaarung bilden, und wobei unterschiedliche Einrichtungspaarungen mit verschiedenen, drehbaren Bearbeitungseinrichtungen (18, 19, 31, 32, 45, 46, 49, 61, 62), für die Werkstückbearbeitung aktivierbar sind,
**dadurch gekennzeichnet, dass**
das erste Werkzeugteil (4, 48, 68) und das zweite Werkzeugteil (5, 47, 52) um eine mit der Beaufschlagungsachse (11) zusammenfallende Werkzeugdrehachse (13) relativ zueinander drehbar sind und dass ein und derselben Gegeneinrichtung (26, 35, 41, 65) verschiedene drehbare Bearbeitungseinrichtungen (18, 19, 31, 32, 45, 49, 61, 62) zuordenbar sind, indem die Gegeneinrichtung (26, 35, 41, 65) und die drehbaren Bearbeitungseinrichtungen (18, 19, 31, 32, 45, 49, 61, 62) relativ zueinander um die Werkzeugdrehachse (13) drehbar sind und die Gegeneinrichtung (26, 35, 41, 66) und/oder die drehbaren Bearbeitungseinrichtungen (18, 19, 31, 32, 45, 49, 61, 62) um die Werkzeugdrehachse aufeinander folgen.

2. Werkzeug nach Anspruch 1, **dadurch gekennzeichnet, dass** an dem ersten Werkzeugteil (4, 48, 68) wenigstens zwei drehbare Bearbeitungseinrichtungen (18, 19, 31, 32, 45, 46, 49, 61, 62) vorgesehen sind, welche unterschiedlich sind.

3. Werkzeug nach einem der vorhergehenden Ansprüche, **dadurch gekennzeichnet, dass** wenigstens zwei drehbare Bearbeitungseinrichtungen (18, 19, 31, 32, 45, 46, 49, 61, 62) an einem gemeinsamen Drehkörper vorgesehen sind, welcher an dem ersten Werkzeugteil (4, 48, 68) drehbar ist.

4. Werkzeug nach einem der vorhergehenden Ansprüche, **dadurch gekennzeichnet, dass** der gemeinsame Drehkörper verschiedene drehbare Bearbeitungseinrichtungen (18, 19, 31, 32, 45, 46, 49, 61, 62) ausbildet, indem er längs seiner Drehachse (20, 33, 51, 63) unterschiedliche Querschnitte aufweist.

5. Werkzeug nach einem der vorhergehenden Ansprüche, **dadurch gekennzeichnet, dass** der gemeinsame Drehkörper als Rolle (21, 34, 50, 64) ausgebildet ist.

6. Werkzeug nach einem der vorhergehenden Ansprüche, **dadurch gekennzeichnet, dass** wenigstens eine drehbare Gegeneinrichtung (26, 35, 41, 42, 65) vorgesehen ist, welche an dem zweiten Werkzeugteil (5, 47, 52) drehbar ist.

7. Werkzeug nach einem der vorhergehenden Ansprüche, **dadurch gekennzeichnet, dass** wenigstens eine drehbare Gegeneinrichtung (26, 35, 41, 42, 65) und/oder wenigstens eine drehbare Bearbeitungseinrichtung an einer allseitig drehbaren Kugel (23, 36, 43, 44, 53, 54, 55, 66) vorgesehen ist.

8. Werkzeug nach einem der vorhergehenden Ansprüche, **dadurch gekennzeichnet, dass** unterschiedliche Einrichtungspaarungen mit verschiedenen drehbaren Bearbeitungseinrichtungen (45, 46, 49) für die Werkstückbearbeitung aktivierbar sind, indem die Gegeneinrichtung (41, 42) und/oder die Bearbeitungseinrichtung der zu aktivierenden Einrichtungspaarung in eine Funktionslage überführbar ist (sind), in welcher sie bei der Werkstückbearbeitung gegenüber wenigstens einer anderen Gegeneinrichtung (41, 42) bzw. wenigstens einer anderen Bearbeitungseinrichtung zu dem Werkstück (2) hin vorsteht (vorstehen).

## Claims

1. Tool for processing, in particular for forming and/or cutting, plate-like workpieces, in particular metal sheets, having
- a first tool portion (4, 48, 68) and a second tool portion (5, 47, 52) which can be arranged at mutually opposing sides of a workpiece (2) to be processed in such a manner that the two tool portions (4, 5, 47, 48, 52, 68) are opposite each other along an application axis (11),
- at least two rotatable processing devices (18, 19, 31, 32, 45, 46, 49, 61, 62) which can be rotated on the first tool portion (4, 48, 68) about at least one rotation axis (20, 33, 51, 63) which extends perpendicularly relative to the application axis (11), and which follow each other perpendicularly relative to the application axis (11),
- and at least one counter-device (26, 35, 41, 42, 65) on the second tool portion (5, 47, 52),
at least one of the rotatable processing devices (18, 19, 31, 32, 45, 46, 49, 61, 62) and a counter-device (26, 35, 41, 42, 65) forming a device pairing for the workpiece processing operation, and different device pairings having different rotatable processing devices (18, 19, 31, 32, 45, 46, 49, 61, 62) being able to be activated for the workpiece processing operation,
**characterised in that**
the first tool portion (4, 48, 68) and the second tool portion (5, 47, 52) are able to be rotated relative to each other about a tool rotation axis (13) that coincides with the application axis (11), and **in that** different rotatable processing devices (18, 19, 31, 32, 45, 49, 61, 62) can be associated with one and the same counter-device (26, 35, 41, 65) by the counter-device (26, 35, 41, 65) and the rotatable processing devices (18, 19, 31, 32, 45, 49, 61, 62) being able to be rotated relative to each other about the tool rotation axis (13), and the counter-device (26, 35, 41, 66) and/or the rotatable processing devices (18, 19, 31, 32, 45, 49, 61, 62) following each other about the tool rotation axis.

2. Tool according to claim 1, **characterised in that** there are provided on the first tool portion (4, 48, 68), at least two rotatable processing devices (18, 19, 31, 32, 45, 46, 49, 61, 62) which are different.

3. Tool according to either of the preceding claims, **characterised in that** at least two rotatable processing devices (18, 19, 31, 32, 45, 46, 49, 61, 62) are provided on a common rotation member, which can be rotated on the first tool portion (4, 48, 68).

4. Tool according to any one of the preceding claims, **characterised in that** the common rotation member forms different rotatable processing devices (18, 19, 31, 32, 45, 46, 49, 61, 62) by having different cross-sections along the rotation axis (20, 33, 51, 63) thereof.

5. Tool according to any one of the preceding claims, **characterised in that** the common rotation member is constructed as a roller (21, 34, 50, 64).

6. Tool according to any one of the preceding claims, **characterised in that** there is provided at least one rotatable counter-device (26, 35, 41, 42, 65) which can be rotated on the second tool portion (5, 47, 52).

7. Tool according to any one of the preceding claims, **characterised in that** at least one rotatable counter-device (26, 35, 41, 42, 65) and/or at least one rotatable processing device is provided on a ball (23, 36, 43, 44, 53, 54, 55, 66) which can be rotated at all sides.

8. Tool according to any one of the preceding claims, **characterised in that** different device pairings having different rotatable processing devices (45, 46, 49) can be activated for the workpiece processing operation by the counter-device (41, 42) and/or the processing device of the device pairing to be activated being able to be moved into an operating position, in which it/they protrude(s) with respect to at least one other counter-device (41, 42) or at least one other processing device in the direction towards the workpiece (2) during the workpiece processing operation.

## Revendications

1. Outil d'usinage, en particulier de déformation et/ou de découpe de pièces en forme de plaques et en particulier de tôles, avec
- une première partie d'outil (4, 48, 68) et une deuxième partie d'outil (5, 47, 52), qui peuvent être disposées sur des côtés mutuellement opposés d'une pièce (2) à usiner de telle sorte que les deux parties d'outil (4, 5, 47, 48, 62, 68) se font face le long d'un axe de sollicitation (11),
- au moins deux dispositifs d'usinage rotatifs (18, 19, 31, 32, 45, 46, 49, 61, 62), qui sont rotatifs sur la première partie d'outil (4, 48, 68) autour d'au moins un axe de rotation (20, 33, 51, 63) s'étendant perpendiculairement à l'axe de sollicitation (11), et qui se suivent perpendiculairement à l'axe de sollicitation (11),
- et au moins un dispositif complémentaire (26, 35, 41, 42, 65) sur la deuxième partie d'outil (5, 47, 52),
sachant qu'au moins un des dispositifs d'usinage rotatifs (18, 19, 31, 32, 45, 46, 49, 61, 62) et un dispositif complémentaire (26, 35, 41, 42, 65) forment un appariement de dispositifs pour l'usinage de la pièce, et sachant que différents appariements de dispositifs qui présentent des dispositifs d'usinage rotatifs différents (18, 19, 31, 32, 45, 46, 49, 61, 62) peuvent être activés pour l'usinage de la pièce,
**caractérisé en ce que** la première partie d'outil (4, 48, 68) et la deuxième partie d'outil (5, 47, 52) sont rotatives l'une par rapport à l'autre autour d'un axe de rotation d'outil (13) coïncidant avec l'axe de sollicitation (11),
et **en ce que** différents dispositifs d'usinage rotatifs (18, 19, 31, 32, 45, 49, 61, 62) peuvent être associés à un seul et même dispositif complémentaire (26, 35, 41, 65), par le fait que le dispositif complémentaire (26, 35, 41, 65) et les dispositifs d'usinage rotatifs (18, 19, 31, 32, 45, 49, 61, 62) sont rotatifs les uns par rapport aux autres autour de l'axe de rotation d'outil (13), et que le dispositif complémentaire (26, 35, 41, 66) et/ou les dispositifs d'usinage rotatifs (18, 19, 31, 32, 45, 49, 61, 62) se suivent autour de l'axe de rotation d'outil.

2. Outil selon la revendication 1, **caractérisé en ce qu'**au moins deux dispositifs d'usinage rotatifs (18, 19, 31, 32, 45, 46, 49, 61, 62) qui sont différents sont prévus sur la première partie d'outil (4, 48, 68).

3. Outil selon l'une des revendications précédentes, **caractérisé en ce qu'**au moins deux dispositifs d'usinage rotatifs (18, 19, 31, 32, 45, 46, 49, 61, 62) sont prévus sur un corps de rotation commun qui est rotatif sur la première partie d'outil (4, 48, 68).

4. Outil selon l'une des revendications précédentes, **caractérisé en ce que** le corps de rotation commun forme différents dispositifs d'usinage rotatifs (18, 19, 31, 32, 45, 46, 49, 61, 62) par le fait qu'il présente différentes sections le long de son axe de rotation (20, 33, 51, 63).

5. Outil selon l'une des revendications précédentes, **caractérisé en ce que** le corps de rotation commun est réalisé sous forme de rouleau (21, 34, 50, 64).

6. Outil selon l'une des revendications précédentes, **caractérisé en ce qu'**il est prévu au moins un dispositif complémentaire rotatif (26, 35, 41, 42, 65), qui est rotatif sur la deuxième partie d'outil (5, 47, 52).

7. Outil selon l'une des revendications précédentes, **caractérisé en ce qu'**il est prévu au moins un dispositif complémentaire rotatif (26, 35, 41, 42, 65) et/ou au moins un dispositif d'usinage rotatif sur une boule (23, 36, 43, 44, 53, 54, 55, 66) rotative de tous côtés.

8. Outil selon l'une des revendications précédentes, **caractérisé en ce que** différents appariements de dispositifs avec différents dispositifs d'usinage rotatifs (45, 46, 49) peuvent être activés pour l'usinage de l'outil, par le fait que le dispositif complémentaire (41, 42) et/ou le dispositif d'usinage de l'appariement de dispositifs à activer peut (peuvent) être transféré(s) dans une position fonctionnelle dans laquelle, lors de l'usinage de la pièce, il(s) dépasse (dépassent) en direction de la pièce (2) par rapport à au moins un autre dispositif complémentaire (41, 42) ou respectivement à au moins un autre dispositif d'usinage.
